# EUROPEAN PATENT SPECIFICATION

(11) **EP 2 798 228 B1**
(45) Date of publication and mention of the grant of the patent: **18.09.2019**
(21) Application number: 12871717.0
(22) Date of filing: 30.12.2012
(51) Int. Cl.: F15D 1/02, F16L 41/02, F01D 25/18

(54) **FLow merging device and method for merging these flows**
Strömungsmischungsvorrichtung und Verfahren zum Mischen dieser Strömungen
Dispositif de mélange de courant et procédé de mélange de tels flots

(30) Priority: 31.12.2011 US 201161582272 P
(43) Date of publication of application: 05.11.2014
(73) Proprietor: Rolls-Royce Corporation, Indianapolis, IN 46241 (US)
(72) Inventor: LEWIS, Jennifer, Ann, Danville, IN 46122 (US); MORRIS, Duane, Allen, Indianapolis, IN 46214 (US)
(74) Representative: Roberts, Peter David
(86) International application number: PCT/US2012/072230
(87) International publication number: WO 2013/141940

(56) References cited:
- EP-A2- 1 408 280
- GB-A- 1 210 994
- US-A- 445 090
- US-A- 445 090
- US-A- 1 326 078
- US-A- 1 586 691
- US-A- 1 586 691
- US-A- 3 178 882
- US-A- 4 020 632
- US-A- 4 057 371
- US-A- 4 525 995
- US-A- 4 555 902

## Description

### TECHNICAL FIELD

The present invention generally relates to gas turbine engine working fluid systems, and more particularly, but not exclusively, to gas turbine engine systems that merge fluid flow streams.

### BACKGROUND

Providing gas turbine engine working fluid devices that are capable of merging flow streams remains an area of interest. Some existing systems have various shortcomings relative to certain applications. Accordingly, there remains a need for further contributions in this area of technology.

US4555902 discloses a heat recovery system for supplementing the exhaust mass flow from a gas turbine with additional flow of preheated air to provide greater steam output from a heat recovery unit such as a steam generator.

EP1408280 discloses a swirler including a tubular body having a row of secondary radial swirl vanes.

US3178882 discloses a supercharger for internal combustion engines and, in particular, an improved type of supercharger and improved method for providing a combustible mixture to engines by utilisation of improved supercharging principles. US4020632 discloses a gas turbine engine fuel delivery.

### SUMMARY

One embodiment of the present invention is an apparatus according to claim 1 and another embodiment is a method according to claim 14. Further embodiments, forms, features, aspects, benefits, and advantages of the present application shall become apparent from the description and figures provided herewith.

### BRIEF DESCRIPTION OF THE FIGURES

FIG. 1 is an embodiment of a gas turbine engine having a working fluid system.
FIG. 2 is an embodiment of a working fluid system.
FIG. 3 is an embodiment of a flow union member.
FIG. 4 is an embodiment of a flow union member.

### DETAILED DESCRIPTION OF THE ILLUSTRATIVE EMBODIMENTS

For the purposes of promoting an understanding of the principles of the invention, reference will now be made to the embodiments illustrated in the drawings and specific language will be used to describe the same. It will nevertheless be understood that no limitation of the scope of the invention is thereby intended. Any alterations and further modifications in the described embodiments, and any further applications of the principles of the invention as described herein are contemplated as would normally occur to one skilled in the art to which the invention relates.

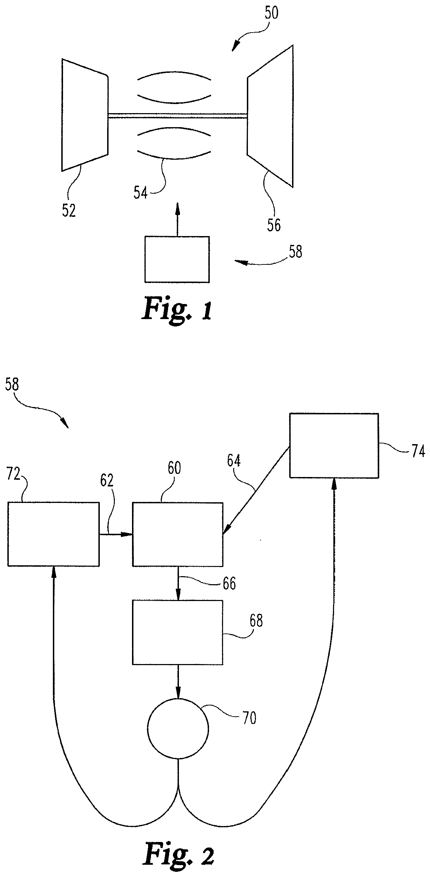

With reference to FIG. 1, a gas turbine engine 50 is disclosed having a compressor 52, combustor 54, and turbine 56 which together operate to provide power and/or thrust, among other potential uses. The gas turbine engine is depicted as a single spool turbojet engine in the illustrated embodiment but other embodiments can take on any variety of forms. For example, the gas turbine engine 50 can have multiple spools configured to have any number of rotating turbomachinery components, and alternatively and/or additional can be arranged as a turbofan, turboshaft, or turboprop engine. The gas turbine engine can be adaptive and/or configurable cycle engine, and furthermore can be integrated with any number of systems. In short, the gas turbine engine 50 has any number of uses and can take on any variety of embodiments.

In one form the gas turbine engine 50 is coupled with an aircraft to provide power. As used herein, the term "aircraft" includes, but is not limited to, helicopters, airplanes, unmanned space vehicles, fixed wing vehicles, variable wing vehicles, rotary wing vehicles, unmanned combat aerial vehicles, tailless aircraft, hover crafts, and other airborne and/or extraterrestrial (spacecraft) vehicles. Further, the present inventions are contemplated for utilization in other applications that may not be coupled with an aircraft such as, for example, industrial applications, power generation, pumping sets, naval propulsion, weapon systems, security systems, perimeter defense/security systems, and the like known to one of ordinary skill in the art.

The gas turbine engine 50 of FIG. 1 is depicted as having a working fluid system 58 useful to provide a working fluid to components and systems of, or coupled to, the gas turbine engine 50, some of which will be described further below. The working fluid system 58 can provide a supply of working fluid in a close circuit. In one non-limiting form the working fluid system 58 operates such that the working fluid recirculates within the system during operation of the gas turbine engine 50. The working fluid can take on a variety of forms and can be useful in a number of different manners. In one form the working fluid can have usefulness in providing lubrication and/or heat transfer to the components and systems. Reference will be made below to a lubricant but no limitation is hereby intended as to the type of useful working fluid used in the system. The lubricant provided by the lubrication system 58 can flow within the system through any number of passageways that can have flow splits and flow mergers. These passageways can be created by conduits such as hoses and ducts that can be connected with other structures that provide lubricant to various components and structures of or coupled to the gas turbine engine or related accessories. The lubricant used in the lubrication system can be used primarily to facilitate relative movement of coupled parts. In some additional forms the lubricant can have a subsidiary purpose of transferring heat from relatively high temperature regions to relatively low temperature regions of the coupled parts, gas turbine engine, related accessories, etc. In alternative embodiments the lubricant can have a primary role of facilitating heat transfer, such as cooling, with a subsidiary role of facilitating relative movement of parts. The lubricant can be an oil, whether natural, synthetic, processed, etc. and can have any variety of characteristics.

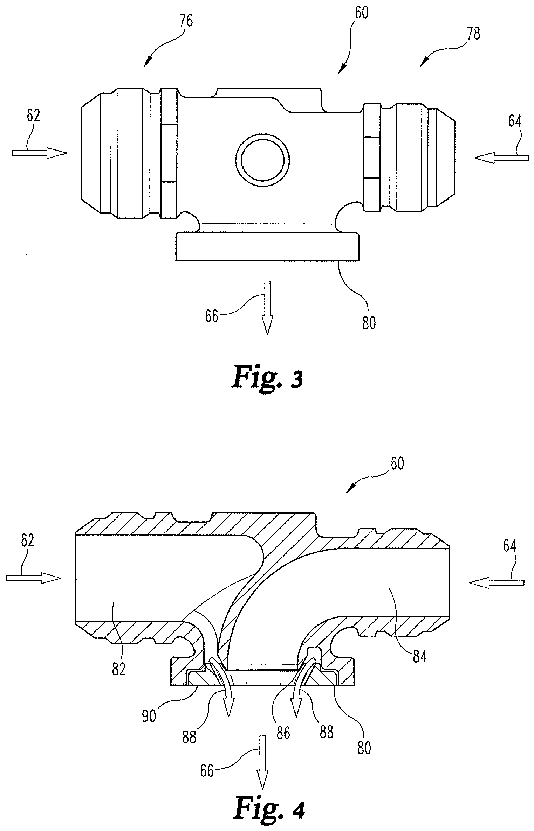

One form of the working fluid system 58 is shown in FIG. 2 and includes a flow union member 60 that is shown as receiving a left side flow of lubricant 62 and a right side flow of lubricant 64. As used herein, the terms "left" and "right" are used for ease of reference and convenience only to distinguish two separate flows of lubricant as depicted in the illustrated embodiment of the FIG. 2, but no limitation is hereby intended as to an orientation that may be used in a physical embodiment. The flow union member 60 is used to combine the left side flow 62 and the right side flow 64 to produce a combined flow 66 shown exiting the flow union member 60. An embodiment of the flow union member 60 will be shown below in FIG. 3.

In the illustrated embodiment of FIG. 2, the combined flow 66 is received by a filter 68 that can be used to recondition the working fluid and remove particulates that may be in the working fluid. The filter 68 can take a variety of forms such as a media based filter and a centrifugal type filter, among potential others. The filter 68 is depicted as a single block in the illustrated embodiment but additional filters arranged in series and/or in parallel can also be used. In one non-limiting embodiment the filter 68 can be a scavenge oil filter for the gas turbine engine 50.

The filter 68 provide working fluid to a fluid mover 70 that assists in propelling the working fluid in the system 58. The fluid mover 70 can take a variety of forms such as a reciprocating pump, compressor, and the like. The fluid mover 70 can be capable of providing working fluid at a variety of pressures and flow rates.

Working fluid can be provided by the system 58 to any number of components, structures, accessories, etc of or connected with the gas turbine engine 50. As depicted in FIG. 2, working fluid is provided to a left side component 72 and a right side component 74. In one non-limiting form the left side component 72 can represent a gas turbine engine core section and the working fluid a lubricant such as oil for the core section. The lubricant can be used in an area radially inward of a flow path of the core section to assist components that are moving relative to each other such as bearings, etc. The passageway(s) that the working fluid will flow through the core section can be circuitous and can be defined by various structures of the core section. A sump can be used in the core section to collect the lubricant either before or after dispersal through the core section. The right side component 74 can represent another portion of the gas turbine engine and in some embodiments can represent an auxiliary gear box driven by work extracted from the gas turbine engine. The lubricant can also be used to assist in facilitating relative movement of parts in the accessory gear box. The passageway(s) that the working fluid will flow through the gear box can be defined by various structures. A reservoir can be used in some embodiments to collect the lubricant.

Though the illustrated embodiment shows particular flow locations of the filter 68 and fluid circulator 70, it will be appreciated that other embodiments can include other alternative locations and configurations than that depicted.

Turning now to FIGS. 3 and 4, one embodiment of the flow union member 60 is shown. FIG. 3 depicts a view of an exterior of the flow union member 60, and FIG. 4 depicts an internal view of the member 60. The left side flow of lubricant 62 enters the left side and the right side flow of lubricant 64 enters the right side. The flow union member 60 provides internal flow passageways such that the flow is eventually combined as represented by combined flow 66. Starting now with a description of its exterior, the flow union member 60 can include provisions 76 and 78 that permit the member 60 to be connected on the left side and right side to passageway couplings, such as but not limited to hose couplings. Such couplings can be of a quick connect variety, but can take on other forms such as but not limited to threaded couplings. A bottom 80 of the member 60 can take the form of a flange which can have apertures which permit attachment to a housing. Such an flange can provide any number of apertures through which bolts, screws, rivets, or other attachment mechanisms can be used. A housing that is attached to the flange can take the form of a filter head useful with the filter 68. In other embodiments the left and right sides of the member 60 can be configured as flanges and the bottom as a provision such as a hose coupling. In still further embodiments all of the left, right, and bottom sides can be configured as flanges. In still further embodiments flared ends can be provided in any of the entrance to passageways 82 and 84 and the exit. These and other variations are contemplated herein to permit the flow union member 60 to be coupled with passageways such as hoses and housing.

FIG. 4 depicts an internal view of the illustrated embodiment of the member 60 and shows a left entry passageway 82 and a right entry passageway 84. Starting first with the right entry passageway 84, working fluid enters and is turned toward the bottom 80 of the member 60. The passageway 84 is turned in a curvilinear manner from the direction at which fluid enters the member 60 toward the direction that fluid exits from the bottom 80. The working fluid in the illustrated embodiment is turned roughly ninety degrees, but other embodiments can include turns having a larger or smaller turn angle. The passageway that extends from the entrance to the exit can have the same cross sectional area, but in some forms the cross sectional area can change, either to the larger or the smaller. The shape of the passageway is circular but can take on different forms in other embodiments.

An end 86 of the passageway 84 is shown as stopping prior to the bottom 80 of the flow union member 60, but in the end 86 can stop at other locations in different embodiments. For example, in some forms the end 86 can stop at the bottom 80 to form a flush exit. In still other embodiments the end 86 can stop past the bottom 80. The end 86 can include a symmetric rim that resides in a plane parallel with the bottom 80, but can also take on any variety of other forms. For example, the end 86 can be angled relative to the bottom, and it can alternatively and/or additionally include a rim that does not reside in a plane but rather includes a portion or portions out of plane. The rim can be fluted or ridged or can taken on any variety of other shapes. In short, the end 86 can take on any variety of shapes and orientations.

The left entry passageway 82 receives the working fluid and turns it toward the bottom 80. The passageway 82 is turned roughly ninety degrees in this way, but other embodiments can include turns having a larger or smaller turn angle. The passageway 82 is routed around the circumferential periphery of the passageway 84 as can be appreciated by the flow arrows 88. The arrows 88 represent a circumferential shaped flow passage around the outer periphery of the passageway 84. The circumferential shape can be annular in some embodiments, segmented annular in others, and in still others can be arc shaped. In some forms the passageway 82 is split by the passageway 84 such that the passageway 82 is wrapped around the passageway 84 as it is being turned from the entrance direction to the exit direction. The passageway 82 between the passageway 84 and a housing of the flow union member 60 can have a cross section that varies as a function of position as it encounters the passageway 84.

An end 90 of the passageway 82 can have a shape that, when combined with an exterior shape of the end 86, directs a flow of working fluid exiting the passageway 82 radially inward toward the flow of working fluid exiting the passageway 84. The effect of the shapes of the end 90 and exterior shape of end 86 can be seen in the curved arrows 88. In some embodiments the end 90 of the passageway may be turned inward while the exterior shape of the end 86 is not likewise shaped. In other embodiments the exterior shape of the end 86 can permit radially inward directed flow of working fluid but the end 90 is not similarly shaped. In any event, the cross sectional area through which the working fluid traverses as it exits the passageway 82 can be tailored to result in a change in velocity and/or pressure of the working fluid as it joins the working fluid exiting the passageway 84.

The illustrated embodiment in the figures depicts a "T" configuration in which the arms of the member 60 are shaped at right angles in the form of a T, but other embodiments can take on other configurations. For example, some embodiments which are not part of the invention, can more closely resemble a Y-shape, while still further embodiments take on other shapes having arms that do not readily resemble a character from the alphabet.

In one non-limiting embodiment the working fluid in the passageway 84 can be at a relatively low pressure and fluid flow velocity while the working fluid in the passageway 82 can be a relatively high pressure and fluid flow velocity. When the working fluid exiting the passageway 84 is surrounded by the relatively high velocity and pressure of the working fluid exiting the passageway 82, the low velocity stream can be pulled along by the high velocity stream thus assisting in pulling out of the end of the flow union member 60. In other embodiments the relationship of relatively high or relatively low pressure and/or velocity other than those discussed above can be changed between that of passageway 84 and 82 to create any number of various ejector style pumping actions between the working fluids exiting each of the passageways. The invention however is limited to the working fluid exiting the passageway 84 having a pressure lower than the pressure of the surrounding working fluid exiting the passageway 82.

An aspect of the present application provides an apparatus comprising a gas turbine engine having a fluid flow path for the conveyance of air through a rotatable compressor, a rotatable turbine, and a combustor capable of combusting a mixture of a fuel and air that traverses the fluid flow path, the gas turbine engine also having a path for the conveyance of a utility working fluid, a first gas turbine passage for the conveyance of a first stream of the utility working fluid and a second gas turbine passage for the conveyance of a second stream of the utility working fluid, wherein the first stream and the second stream are combined to form a merged stream, and a flow merging union to merge the first stream and the second stream of the utility working fluid and having an outlet to pass the merged utility working fluid, the flow merging union also including a first inlet in fluid communication with the first gas turbine passage and a second inlet in fluid communication with the second gas turbine passage, the flow merging union including an internal passage forming a flow path surface between the first inlet and the outlet and an internal fluid flow path that extends from the second inlet toward the outlet, the internal passage disposed within the fluid flow path such that a flow of utility working fluid in the internal fluid flow path is routed around the outside of the flow path surface of the internal passage to form a circumferentially extending fluid flow path adjacent a flow path of the internal passage.

A feature of the present application provides wherein the first inlet receives fluid in a direction opposite the fluid received in the second inlet.

Another feature of the present application provides wherein the flow of utility working fluid through the first inlet is at a substantially right angle to a merged flow of the utility working fluid.

Still another feature of the present application provides wherein the internal passage includes a curvilinear bend between the first inlet and the outlet.

Yet still another feature of the present application provides wherein the circumferentially extending fluid flow path adjacent a flow path of the internal passage forms an annular flow path, and wherein an ejector is formed with the utility working fluid in the internal fluid flow path and the utility working fluid in the internal passage.

Still yet another further feature of the present application further includes a pump in fluid communication with the flow merging union, the pump useful to convey the utility working fluid, and a filter for filtering contaminate from the utility working fluid in fluid communication with the pump.

A further feature of the present application provides wherein the utility working fluid is a lubricant, and wherein the utility working fluid is routed to contact relatively rotating mechanisms of a turbomachinery mechanical component.

A still further feature of the present application provides wherein the lubricant is routed to contact a gearbox.

Another aspect of the present application provides an apparatus comprising a gas turbine engine having a working fluid flow path through a compressor and turbine and out an exhaust, the gas turbine engine also having a utility fluid flow path through a mechanical device for the passage of a utility fluid, a utility fluid circulation system having a first branch to convey a first flow of utility fluid to a confluence area and a separate second branch to convey a second flow of utility fluid to the confluence area, the first branch having a first portion upstream of the confluence area extending substantially enclosed within an interior of a passage and the second branch having a second portion upstream of the confluence extending along the exterior of the passage, and wherein the confluence area is an area in which the first flow of utility fluid and the second flow of utility fluid are combined during operation of the utility fluid circulation system.

A feature of the present application provides wherein the second portion of the second branch extends circumferentially around the first portion of the first branch, and wherein the first flow of utility fluid and the second flow of utility fluid interact to form an ejector action during operation of the utility fluid circulation system.

Another feature of the present application provides wherein the second portion forms an annular space radially outward from the first portion to convey the second flow of utility fluid, and wherein the utility fluid is a lubricant.

Still another feature of the present application provides wherein the first portion includes a turn from a first direction at an upstream location to another direction at a downstream location.

Yet another feature of the present application provides wherein the second portion is configured to change a direction of the second flow of utility fluid, and wherein the utility fluid is a lubricant.

Yet still another feature of the present application provides wherein the confluence area forms an outlet of a union mechanism, the first direction, second direction, and the outlet form one of a T-shape. An Y-shape is not part of the invention.

A further feature of the present application provides wherein the first direction is offset from the another direction by about ninety degrees.

Still another aspect of the present application provides an apparatus comprising a gas turbine engine having rotating turbomachinery capable of operating at elevated temperatures while compressing and expanding a working fluid, the gas turbine engine also including a first passage and a second passage configured to circulate a utility fluid for use with the gas turbine engine, the first passage in fluid communication with moveable components of the rotating turbomachinery, and means for merging a stream of utility fluid from the first passage with a stream of utility fluid in the second passage.

Yet still another aspect of the present application provides a method according to claim 14, comprising rotating a compressor of a gas turbine engine to elevate a pressure of a working fluid flowing, circulating a utility working fluid throughout a closed circuit of the gas turbine engine, separately flowing the utility working fluid through a first passage and a second passage, merging the utility working fluid in the first passage with the utility working fluid in the second passage, wherein the merging includes: conveying the utility working fluid through a portion of the first passage to a junction, routing the utility working fluid in the second passage between an exterior of the portion of the first passage and an interior of a passage junction device, and combining a core flow of the utility working fluid in the first passage with a circumferentially shaped flow of the utility working fluid in the second passage.

A feature of the present application provides wherein the utility working fluid is a lubricating fluid, the flowing includes conveying the lubricating fluid through a lubricating fluid line upstream of the passage junction device.

Another feature of the present application further includes pumping the lubricating fluid through the closed circuit and forming an annular flow of the lubricating fluid in the second passage.

Still another feature of the present application provides wherein the utility fluid is a lubricant, and which further includes receiving lubricant from a reduction gear box through the first passage and lubricant from a power section of the gas turbine engine through the second passage.

Yet still another feature of the present application further includes filtering the lubricant in a lubricant filter downstream of the merging the utility fluid.

Still yet another feature of the present application provides wherein the utility fluid is a lubricant, and wherein the merging provides the lubricant to a lubricant filter head assembly.

It should be understood that while the use of words such as preferable, preferably, preferred or more preferred utilized in the description above indicate that the feature so described may be more desirable, it nonetheless may not be necessary and embodiments lacking the same may be contemplated as within the scope of the invention, the scope being defined by the claims that follow. In reading the claims, it is intended that when words such as "a," "an," "at least one," or "at least one portion" are used there is no intention to limit the claim to only one item unless specifically stated to the contrary in the claim. When the language "at least a portion" and/or "a portion" is used the item can include a portion and/or the entire item unless specifically stated to the contrary.

## Claims

1. An apparatus comprising:
a gas turbine engine (50) having a fluid flow path for the conveyance of air through a rotatable compressor (52), a rotatable turbine (56), and a combustor (54) capable of combusting a mixture of a fuel and air that traverses the fluid flow path, the gas turbine engine also having a path for the conveyance of a utility working fluid;
a first gas turbine passage for the conveyance of a first stream of the utility working fluid (64) and a second gas turbine passage for the conveyance of a second stream of the utility working fluid (62), wherein the first stream and the second stream are combined to form a merged stream (66);
a flow merging union (60) to merge the first stream (64) of the utility working fluid at a first pressure and the second stream (62) of the utility working fluid at a second pressure, wherein the second pressure is greater than the first pressure, and having an outlet to pass the merged utility working fluid, the flow merging union also including a first inlet in fluid communication with the first gas turbine passage (84) and a second inlet in fluid communication with the second gas turbine passage (86), the flow merging union (60) including an internal passage (84) forming a flow path surface between the first inlet and the outlet and an internal fluid flow path (82) that extends from the second inlet toward the outlet, the internal passage (84) disposed within the fluid flow path such that a flow of utility working fluid in the internal fluid flow path (82) is routed around the outside of the flow path surface of the internal passage (84) to form a circumferentially extending fluid flow path adjacent a flow path of the internal passage (84); and
wherein the first inlet receives fluid in a direction opposite the fluid received in the second inlet.

2. The apparatus of claim 1, wherein the flow of utility working fluid through the first inlet is at a substantially right angle to a merged flow (66) of the utility working fluid.

3. The apparatus of claim 2, wherein the internal passage (84) includes a curvilinear bend between the first inlet and the outlet.

4. The apparatus of claim 1, wherein the circumferentially extending fluid flow path (82) adjacent a flow path of the internal passage (84) forms an annular flow path (88), and wherein an ejector is formed with the utility working fluid in the internal fluid flow path and the utility working fluid in the internal passage.

5. The apparatus of claim 1, which further includes:
a pump (70) in fluid communication with the flow merging union (60), the pump useful to convey the utility working fluid; and
a filter (68) for filtering contaminate from the utility working fluid in fluid communication with the pump.

6. The apparatus of claim 5, wherein the utility working fluid is a lubricant, and wherein the utility working fluid is routed to contact relatively rotating mechanisms of a turbomachinery mechanical component (72; 74);
wherein optionally the lubricant is routed to contact a gearbox.

7. The apparatus of claim 1, wherein the gas turbine engine fluid flow path flows out of an exhaust, and wherein the path for conveyance of the utility working fluid passes through a mechanical device for the passage of the utility working fluid; and
wherein the apparatus further comprises a confluence area in which the first stream of utility working fluid (64) and the second stream of utility working fluid (62) are combined during operation of the flow merging union (60).

8. The apparatus of claim 7, wherein the confluence area forms the outlet (66) of the flow merging union (60); and
the direction of the first stream (64), direction of the second stream (62), and the flow merging union outlet (66) forms a T-shape.

9. The apparatus of claim 7, wherein the first stream of utility working fluid (64) and the second stream of utility working fluid (62) interact to form an ejector action during operation of the flow merging union (60).

10. The apparatus of claim 9, wherein the internal fluid flow path (82) forms an annular space radially outward from the internal passage (84) to convey the second stream of utility working fluid (62), and wherein the utility working fluid is a lubricant.

11. The apparatus of claim 7, wherein the internal passage (84) includes a turn from a first direction at an upstream location to another direction at a downstream location.

12. The apparatus of claim 11, wherein the internal fluid flow path (82) is configured to change a direction of the second stream of utility working fluid (62), and wherein the utility working fluid is a lubricant.

13. The apparatus of claim 12, wherein the first direction is offset from the another direction by about ninety degrees.

14. A method comprising:
rotating a compressor of a gas turbine engine to elevate a pressure of a working fluid flowing;
circulating a utility working fluid throughout a closed circuit of the gas turbine engine;
separately flowing the utility working fluid through a first passage and a second passage, the utility working fluid of the first passage being received in a direction opposite the utility working fluid received in the second passage;
merging the utility working fluid in the first passage at a first pressure with the utility working fluid in the second passage at a second pressure, wherein the second pressure is greater than the first pressure, and, wherein the merging includes:
conveying the utility working fluid through a portion of the first passage to a junction;
routing the utility working fluid in the second passage between an exterior of the portion of the first passage and an interior of a passage junction device; and
combining a core flow of the utility working fluid in the first passage with a circumferentially shaped flow of the utility working fluid in the second passage.

15. The method of claim 14, wherein the utility fluid is a lubricant, and which further includes receiving lubricant from a reduction gear box through the first passage and lubricant from a power section of the gas turbine engine through the second passage; or
wherein the utility working fluid is a lubricating fluid, the flowing includes conveying the lubricating fluid through a lubricating fluid line upstream of the passage junction device;
wherein optionally the method further includes pumping the lubricating fluid through the closed circuit and forming an annular flow of the lubricating fluid in the second passage.

## Patentansprüche

1. Vorrichtung, die Folgendes umfasst:
einen Gasturbinenmotor (50) mit einem Fluidströmungspfad zum Befördern von Luft durch einen drehbaren Kompressor (52), eine drehbare Turbine (56) und eine Verbrennungsvorrichtung (54), die ein Gemisch aus Brennstoff und Luft verbrennen kann, das den Fluidströmungspfad durchquert, wobei der Gasturbinenmotor auch einen Pfad zum Befördern eines Gebrauchsarbeitsfluids hat;
einen ersten Gasturbinenkanal zum Befördern eines ersten Stroms des Gebrauchsarbeitsfluids (46) und einen zweiten Gasturbinenkanal zum Befördern eines zweiten Stroms des Gebrauchsarbeitsfluids (62), wobei der erste Strom und der zweite Strom zum Bilden eines zusammengeführten Stroms (66) kombiniert werden;
eine Strömungszusammenführung (60) zum Zusammenführen des ersten Stroms (64) des Gebrauchsarbeitsfluids mit einem ersten Druck und des zweiten Stroms (62) des Gebrauchsarbeitsfluids mit einem zweiten Druck, wobei der zweite Druck höher ist als der erste Druck, und mit einem Auslass zum Leiten des zusammengeführten Gebrauchsarbeitsfluids, wobei die Strömungszusammenführung auch einen ersten Einlass in Fluidverbindung mit dem ersten Gasturbinenkanal (84) und einen zweiten Einlass in Fluidverbindung mit dem zweiten Gasturbinenkanal (86) aufweist, wobei die Strömungszusammenführung (60) einen internen Kanal (84) aufweist, der eine Strömungspfadoberfläche zwischen dem ersten Einlass und dem Auslass und einen internen Fluidströmungspfad (82) bildet, der sich vom zweiten Einlass zum Auslass erstreckt, wobei der interne Kanal (84) innerhalb des Fluidströmungspfades angeordnet ist, so dass ein Fluss von Gebrauchsarbeitsfluid im internen Fluidströmungspfad (82) um die Außenseite der Strömungspfadoberfläche des internen Kanals (84) geleitet wird, um einen umfangsmäßig verlaufenden Fluidströmungspfad neben einem Strömungspfad des internen Kanals (84) zu bilden; und
wobei der erste Einlass Fluid in einer Richtung entgegengesetzt zu dem im zweiten Einlass aufgenommenen Fluid aufnimmt.

2. Vorrichtung nach Anspruch 1, wobei der Fluss von Gebrauchsarbeitsfluid durch den ersten Einlass in einem im Wesentlichen rechten Winkel zu einem zusammengeführten Fluss (66) des Gebrauchsarbeitsfluids verläuft.

3. Vorrichtung nach Anspruch 2, wobei der interne Kanal (84) eine kurvenförmige Biegung zwischen dem ersten Einlass und dem Auslass aufweist.

4. Vorrichtung nach Anspruch 1, wobei der umfangsmäßig verlaufende Fluidströmungspfad (82) neben einem Strömungspfad des internen Kanals (84) einen ringförmigen Strömungspfad (88) bildet und wobei ein Ejektor mit dem Gebrauchsarbeitsfluid in dem internen Fluidströmungspfad und dem Gebrauchsarbeitsfluid in dem internen Kanal gebildet wird.

5. Vorrichtung nach Anspruch 1, die ferner Folgendes umfasst:
eine Pumpe (70) in Fluidverbindung mit der Strömungszusammenführung (60), wobei die Pumpe zum Befördern des Gebrauchsarbeitsfluids nützlich ist; und
ein Filter (68) zum Filtern von Kontaminat aus dem Gebrauchsarbeitsfluid in Fluidverbindung mit der Pumpe.

6. Vorrichtung nach Anspruch 5, wobei das Gebrauchsarbeitsfluid ein Schmiermittel ist und wobei das Gebrauchsarbeitsfluid so geleitet wird, dass es relativ rotierende Mechanismen einer mechanischen Komponente (72; 74) der Turbomaschinerie kontaktiert;
und wobei das Schmiermittel optional zum Kontaktieren eines Getriebes geführt wird.

7. Vorrichtung nach Anspruch 1, wobei der Gasturbinenmotor-Fluidströmungspfad aus einer Abführung fließt und wobei der Pfad zum Befördern des Gebrauchsarbeitsfluids durch eine mechanische Vorrichtung für den Kanal des Gebrauchsarbeitsfluids passiert; und
wobei die Vorrichtung ferner einen Zusammenflussbereich umfasst, in dem der erste Strom von Gebrauchsarbeitsfluid (64) und der zweite Strom von Gebrauchsarbeitsfluid (62) während des Betriebs der Strömungszusammenführung (60) kombiniert werden.

8. Vorrichtung nach Anspruch 7, wobei der Zusammenflussbereich den Auslass (66) der Strömungszusammenführung (60) bildet; und
die Richtung des ersten Stroms (64), die Richtung des zweiten Stroms (62) und der Strömungszusammenführungsauslass (66) eine T-Form bilden.

9. Vorrichtung nach Anspruch 7, wobei der erste Strom von Gebrauchsarbeitsfluid (64) und der zweite Strom von Gebrauchsarbeitsfluid (62) interagieren, um eine Ejektorwirkung während des Betriebs der Strömungszusammenführung (60) zu bilden.

10. Vorrichtung nach Anspruch 9, wobei der interne Strömungspfad (82) einen ringförmigen Raum radial auswärts von dem internen Kanal (84) bildet, um den zweiten Strom von Gebrauchsarbeitsfluid (62) zu befördern, und wobei das Gebrauchsarbeitsfluid ein Schmiermittel ist.

11. Vorrichtung nach Anspruch 7, wobei der interne Kanal (84) eine Abbiegung von einer ersten Richtung an einem stromaufwärtigen Ort in eine andere Richtung an einem stromabwärtigen Ort aufweist.

12. Vorrichtung nach Anspruch 11, wobei der interne Fluidströmungspfad (82) zum Ändern einer Richtung des zweiten Stroms von Gebrauchsarbeitsfluid (62) konfiguriert ist und wobei das Gebrauchsarbeitsfluid ein Schmiermittel ist.

13. Vorrichtung nach Anspruch 12, wobei die erste Richtung von der anderen Richtung um etwa neunzig Grad versetzt ist.

14. Verfahren, das Folgendes beinhaltet:
Drehen eines Kompressors eines Gasturbinenmotors, um einen Druck eines fließenden Arbeitsfluids zu erhöhen;
Umwälzen eines Gebrauchsarbeitsfluids durch einen geschlossenen Kreislauf des Gasturbinenmotors;
separates Leiten des Gebrauchsarbeitsfluids durch einen ersten Kanal und einen zweiten Kanal, wobei das Gebrauchsarbeitsfluid des ersten Kanals in einer Richtung entgegengesetzt zu dem im zweiten Kanal aufgenommenen Gebrauchsarbeitsfluid aufgenommen wird;
Zusammenführen des Gebrauchsarbeitsfluids im ersten Kanal mit einem ersten Druck mit dem Gebrauchsarbeitsfluid im zweiten Kanal mit einem zweiten Druck, wobei der zweite Druck höher ist als der erste Druck, und wobei das Zusammenführen Folgendes beinhaltet:
Befördern des Gebrauchsarbeitsfluids durch einen Teil des ersten Kanals zu einer Verbindungsstelle;
Leiten des Gebrauchsarbeitsfluids im zweiten Kanal zwischen einer Außenseite des Teils des ersten Kanals und einer Innenseite einer Kanalverbindungsvorrichtung; und
Kombinieren eines Kernflusses des Gebrauchsarbeitsfluids im ersten Kanal mit einem umfangsmäßig geformten Fluss des Gebrauchsarbeitsfluids im zweiten Kanal.

15. Verfahren nach Anspruch 14, wobei das Gebrauchsfluid ein Schmiermittel ist, und das ferner das Aufnehmen von Schmiermittel von einem Reduktionsgetriebe durch den ersten Kanal und eines Schmiermittels von einer Leistungssektion des Gasturbinenmotors durch den zweiten Kanal beinhaltet; oder
wobei das Gebrauchsarbeitsfluid ein Schmierfluid ist, wobei das Leiten das Befördern des Schmierfluids durch eine Schmierfluidleitung stromaufwärts von der Kanalverbindungsvorrichtung beinhaltet;
wobei das Verfahren optional das Pumpen des Schmierfluids durch den geschlossenen Kreislauf und das Bilden eines ringförmigen Flusses des Schmierfluids im zweiten Kanal beinhaltet.

## Revendications

1. Appareil comprenant :
un moteur à turbine à gaz (50) présentant un chemin d'écoulement de fluide permettant de transporter l'air à travers un compresseur rotatif (52), une turbine rotative (56), et une chambre de combustion (54) capable de brûler un mélange d'un combustible et d'air qui traverse le chemin d'écoulement de fluide, le moteur à turbine à gaz présentant également un chemin permettant de transporter un fluide actif utilitaire ;
un premier passage de turbine à gaz permettant de transporter un premier courant du fluide actif utilitaire (64) et un second passage de turbine à gaz permettant de transporter un second courant du fluide actif utilitaire (62), dans lequel le premier courant et le second courant sont combinés afin de former un courant fusionné (66) ;
une jonction de fusion de flux (60) permettant de fusionner le premier courant (64) du fluide actif utilitaire à une première pression et le second courant (62) du fluide actif utilitaire à une seconde pression, dans lequel la seconde pression est supérieure à la première pression, et présentant une sortie permettant de faire passer le fluide actif utilitaire fusionné, la jonction de fusion de flux incluant également une première entrée en communication fluidique avec le premier passage de turbine à gaz (84) et une seconde entrée en communication fluidique avec le second passage de turbine à gaz (86), la jonction de fusion de flux (60) incluant un passage interne (84) formant une surface de chemin d'écoulement entre la première entrée et la sortie et un chemin d'écoulement de fluide interne (82) qui s'étend de la seconde entrée à la sortie, le passage interne (84) étant disposé dans le chemin d'écoulement de fluide, de sorte qu'un écoulement du fluide actif utilitaire dans le chemin d'écoulement de fluide interne (82) est acheminé autour de la partie extérieure de la surface de chemin d'écoulement du passage interne (84) afin de former un chemin d'écoulement de fluide s'étendant de manière circonférentielle, adjacent à un chemin d'écoulement du passage interne (84) ; et
dans lequel la première entrée reçoit du fluide dans une direction opposée au fluide reçu dans la seconde entrée.

2. Appareil selon la revendication 1, dans lequel l'écoulement de fluide actif utilitaire à travers la première entrée se fait à un angle sensiblement droit par rapport à un flux fusionné (66) du fluide actif utilitaire.

3. Appareil selon la revendication 2, dans lequel le passage interne (84) inclut une pliure curviligne entre la première entrée et la sortie.

4. Appareil selon la revendication 1, dans lequel le chemin d'écoulement de fluide s'étendant de manière circonférentielle (82) adjacent à un chemin d'écoulement du passage interne (84) forme un chemin d'écoulement annulaire (88), et dans lequel un éjecteur est formé avec le fluide actif utilitaire dans le chemin d'écoulement de fluide interne et le fluide actif utilitaire dans le passage interne.

5. Appareil selon la revendication 1, qui inclut en outre :
une pompe (70) en communication fluidique avec la jonction de fusion d'écoulement (60), la pompe étant utile permettant de transporter le fluide actif utilitaire ; et
un filtre (68) permettant de filtrer le contaminant du fluide actif utilitaire en communication fluidique avec la pompe.

6. Appareil selon la revendication 5, dans lequel le fluide actif utilitaire est un lubrifiant, et dans lequel le fluide actif utilitaire est acheminé afin d'entrer en contact avec des mécanismes relativement rotatifs d'un composant mécanique (72 ; 74) de machine turbo ;
dans lequel éventuellement le lubrifiant est acheminé afin d'entrer en contact avec une boîte d'engrenages.

7. Appareil selon la revendication 1, dans lequel le chemin d'écoulement de fluide du moteur à turbine à gaz s'écoule hors d'un échappement, et dans lequel le chemin pour le transport du fluide actif utilitaire passe à travers un dispositif mécanique pour le passage du fluide actif utilitaire ; et
dans lequel l'appareil comprend en outre une zone de confluence dans laquelle le premier courant du fluide actif utilitaire (64) et le second courant du fluide actif utilitaire (62) sont combinés pendant l'actionnement de la jonction de fusion de l'écoulement (60).

8. Appareil selon la revendication 7, dans lequel la zone de confluence forme la sortie (66) de la jonction de fusion d'écoulement (60) ; et
la direction du premier courant (64), la direction du second courant (62), et la sortie de la jonction de fusion d'écoulement (66) forment un T.

9. Appareil selon la revendication 7, dans lequel le premier courant du fluide actif utilitaire (64) et le second courant du fluide actif utilitaire (62) interagissent afin de former une action d'éjecteur pendant le fonctionnement de la jonction de fusion d'écoulement (60).

10. Appareil selon la revendication 9, dans lequel le chemin d'écoulement de fluide interne (82) forme un espace annulaire radialement vers l'extérieur depuis le passage interne (84) afin de transporter le second courant de fluide actif utilitaire (62), et dans lequel le fluide actif utilitaire est un lubrifiant.

11. Appareil selon la revendication 7, dans lequel le passage interne (84) inclut un virage d'une première direction à un endroit en amont vers une autre direction à un endroit en aval.

12. Appareil selon la revendication 11, dans lequel le chemin d'écoulement de fluide (82) est configuré afin de changer une direction du second courant de fluide actif utilitaire (62), et dans lequel le fluide actif utilitaire est un lubrifiant.

13. Appareil selon la revendication 12, dans lequel la première direction est décalée de l'autre direction d'environ quatre-vingt-dix degrés.

14. Procédé comprenant :
la rotation d'un compresseur d'un moteur à turbine à gaz permettant d'élever une pression d'un écoulement de fluide actif ;
la mise en circulation d'un fluide actif utilitaire à travers un circuit fermé du moteur à turbine à gaz ;
l'écoulement séparé du fluide actif utilitaire à travers un premier passage et un second passage, le fluide actif utilitaire du premier passage étant reçu dans une direction opposée au fluide actif utilitaire reçu dans le second passage ;
la fusion du fluide actif utilitaire dans le premier passage à une première pression avec le fluide actif utilitaire dans le second passage à une seconde pression, dans lequel la seconde pression est supérieure à la première pression, et, dans lequel la fusion inclut :
le transport du fluide actif utilitaire à travers une partie du premier passage jusqu'à une jonction ;
l'acheminement du fluide actif utilitaire dans le second passage entre une partie extérieure de la partie du premier passage et une partie intérieure d'un dispositif de jonction de passage ; et
la combinaison d'un écoulement central du fluide actif utilitaire dans le premier passage avec un écoulement de forme circonférentielle du fluide actif utilitaire dans le second passage.

15. Procédé selon la revendication 14, dans lequel le fluide utilitaire est un lubrifiant, et qui inclut en outre la réception de lubrifiant depuis une boîte de motoréducteur à travers le premier passage et du lubrifiant depuis une section électrique du moteur à turbine à gaz à travers le second passage ; ou
dans lequel le fluide actif utilitaire est un fluide lubrifiant, l'écoulement inclut le transport du fluide lubrifiant à travers une conduite de fluide lubrifiant en amont du dispositif de jonction du passage ;
dans lequel éventuellement le procédé inclut en outre le pompage du fluide lubrifiant à travers le circuit fermé et la formation d'un flux annulaire du fluide lubrifiant dans le second passage.
